# EUROPEAN PATENT APPLICATION

(11) **EP 1 995 293 A1**
(43) Date of publication of application: **26.11.2008**
(21) Application number: 07737587.1
(22) Date of filing: 01.03.2007
(51) Int. Cl.: C09K 11/08, C09K 11/56

(54) **NANO-PHOSPHOR AND NANO-PHOSPHOR COMPOSITE**

(30) Priority: 09.03.2006 JP 2006063910
(71) Applicant: Konica Minolta Medical & Graphic, Inc., Hino-shi, Tokyo 191-8511 (JP)
(72) Inventor: TSUKADA, Kazuya, Konica Minolta Medical & Graphic, Inc., Tokyo 1630512 (JP)
(74) Representative: Gille Hrabal Struck Neidlein Prop Roos
(86) International application number: PCT/JP2007/053907
(87) International publication number: WO 2007/102394

(57) **Abstract**

A nano-structure phosphor and a nano-phosphor composite having excellent emission luminance are provided. The nano-phosphor is composed of a nano-structure inorganic crystal having a grain diameter of 2 nm - 10 nm, and has a dispersion ratio of illuminance intensity distribution of 5 %-20%.

## Description

### TECHNICAL FIELD

The present invention relates to a nanophosphor used for a display and a nanophosphor composite used for vital staining observation, antigen-antibody reaction site observation, and protein observation.

### BACKGROUND

Over recent years, in II - VI group semiconductors such as ultrafine particles, represented by Si and Ge, or porous silicon, much attention has been paid to the fact that the nanostructured crystal thereof exhibits specific optical characteristics. Herein, the nanostructured crystal refers to a crystal particle of a particle diameter of several nm, and is generally referred to as a nanocrystal.

When the case in which a II - VI group semiconductor features a nanostructured crystal, as described above, is compared to the case in which the same features a bulk crystal, excellent light absorption characteristics and light emitting characteristics are expressed in the case of featuring the nanostructured crystal. It is conceivable that a II - VI group semiconductor featuring a nanostructured crystal has a large band gap due to its exhibition of a quantum size effect, as compared to the case of featuring a bulk crystal structure. Namely, it has been thought that the band gap is widened by the quantum size effect in the II - VI group semiconductor featuring a nanostructured crystal.

Incidentally, various phosphors have been used for displays for TV sets.

The particle diameters of phosphors currently used for displays for TV sets are several microns (3 - 10 µm). Over recent years, a variety of displays have been developed, and much attention has been paid to plasma displays (PDPs), field emission displays (FEDs), electroluminescence displays (ELDs), and SEDs (surface-conduction electron-emitter displays), especially from the viewpoint of realizing thinner-type displays.

Of these, in the FEDs, it is necessary to reduce the electron beam voltage when employing the thin type display. Since it is necessary to apply a high voltage to the microchip and the diamond thin film used for an electron-emitting source to carry out electron emission, an advanced vacuum technology is required to prevent breakage and also a problem of excessive power consumption has been noted. Accordingly, designing for lower voltage requirement has been urgently sought, and thus investigations toward realizing an electron-emitting source employing a material such as a carbon nanotube have been conducted.

However, when a phosphor of a particle diameter of several µm, as described above, is used for a thin-type display, light emission is not adequately realized due to the low electron beam voltage.

Namely, in such a thin-type display, it has so far been impossible to sufficiently excite a conventional phosphor. The reason is that since the crystal of a conventional phosphor is relatively large, no irradiated electron beams can reach the emitting portion of the light emitter. Namely, when a conventional phosphor of a particle diameter of several µm is used for a thin-type display, light emission has not been adequately realized. Therefore, it can be said that a phosphor excitable at a low voltage is suitable for a thin-type display, especially an FED. As a phosphor satisfying such conditions, II - VI group semiconductors featuring a nanostructured crystal, as described above, can be exemplified.

However, in the nanostructured crystals studied so far, there have been noted problems of insufficient luminance and also occurrence of nonuniform luminance due to poor size distribution resulting from aggregation, as well as due to emission killers caused by excessive crystal surface defects (please refer to Patent Documents 1 - 4).

Further, in the biotechnology field, such a method has been conventionally employed that in investigations of virus or enzyme reaction or in clinical assays, a fluorescent substance composed of organic molecules is used as a marker, and fluorescence emitted via UV irradiation is measured using an optical microscope or optical detector. As such a method, for example, an antigen-antibody fluorescence method is widely known.

In this method, an antibody, to which a fluorescence-emitting organic phosphor bonds (this is called a specific bonding substance), is used. Since antigen-antibody reaction is extremely selective, the location of an antigen can be determined based on fluorescence intensity distribution.

Incidentally, in this field, over recent years, there has been an increasing demand to investigate more precise antibody distribution via observation of a substance less than about 1 µm. To realize this, there has been no alternative but to depend on optical microscopes.

In electron microscope observation, an image is observed via the difference in electron beam reflectance or transmittance between specimens. Therefore, when an antibody is observed with an electron microscope, molecules containing iron or osmium having a relatively large atomic weight, or gold colloids of a size of about 1 - about 100 nm have been currently used as markers for the antibody. For example, when a gold colloid is used as a marker, a composite of protein A and the gold colloid is allowed to bond to an antibody. Since this antibody bonds to a corresponding antigen via an antigen-antibody reaction, the localized site of the antigen can clearly be determined via observation of the location of the gold colloid on the specimen. Further, when at least 2 types of gold colloids of different sizes are allowed to bond to plural types of antibodies, it is also possible to simultaneously observe plural antigens. However, this method is disadvantageous in that colloids may overlap each other during observation, and also it is difficult to conduct quantitative determination only via measurement of the number of colloids.

Further, it is also difficult to observe a cathode luminescence image using the above organic phosphor as a marker. Namely, organic phosphors naturally exhibit relatively low emission efficiency and in addition, emission performance is decreased due to the tendency of breakage of molecular bonds of dyes via electron beam irradiation, whereby light emission tends to be markedly weakened after a single scan, resulting in commercial non-viability.

Still further, these organic phosphors exhibit poor stability during storage, leading to excessive degradation. As phosphors composed of organic molecules, polystyrene spheres of a particle diameter of several tens of nm emitting light of red, green, or blue are known, in addition to organic fluorescent dyes, but the exactly same problems as described above exist.

In contrast, inorganic phosphors are stable to UV irradiation and electron beam irradiation, resulting in less degradation. However, phosphors industrialized for TV sets or lamps commonly feature a size of at least 1 µm, being unable to be employed, as such, as phosphors for antigen-antibody reaction. Therefore, to decrease the particle diameter, pulverizing phosphors or etching with an acid has been explored and carried out, but via these methods, since the ratio, occupied by a non-emitting layer coating an individual particle surface, increases, emission efficiency tends to markedly decrease.
Patent Document 1: Unexamined Japanese Patent Application Publication No. (hereinafter referred to as JP-A) 2002-322468
Patent Document 2: JP-A 2005-239775
Patent Document 3: JP-A 10-310770
Patent Document 4: JP-A 2000-104058

### DISCLOSURE OF THE INVENTION

### PROBLEMS TO BE SOLVED BY THE INVENTION

In view of the above conditions, the present invention was achieved. An object of the present invention is to provide a nanostructured phosphor and a nanophosphor composite exhibiting excellent emission luminance.

### MEANS TO SOLVE THE PROBLEMS

The above object of the present invention can be achieved via the following constitutions:
Item 1. A nanophosphor comprising a nanostructured inorganic crystal having a particle diameter of 2 nm - 10 nm,
   wherein the nanostructured inorganic crystal has a dispersion ratio of luminance intensity distribution of 5% -
   20%.
Item 2. The nanophosphor as described in item 1 above, having a half-value width in an emission spectrum of 2 nm - 20 nm.
Item 3. A nanophosphor composite comprising the nanophosphor as described in item 1 or 2 above and an organic coating material covering the nanophosphor,
   wherein a particle diameter of the nanophosphor composite is 5 nm - 15 nm.

Namely, the inventor of the present invention has conducted diligent investigations to solve the above problems of a phosphor featuring a nanostructured crystal, and has found that nonconventional, enhanced luminance characteristics were realized in such a manner that the luminance per particle of a nanostructured crystal was determined, and the dispersion ratio, on evaluation of the luminance intensity distribution, was controlled within the range of a prescribed value of the present invention. It is presumed that since the luminance distribution is in a monodispersion direction, the compositions, surface levels (attributed to lattice defects), and crystalline properties among particles are extremely close to one another, and then the quantum confinement effect is greatly exerted in the entire phosphor. Especially in a dope-type nanostructured crystal incorporating an activator serving as an emitting center, it is presumed that the activator distribution per particle is similar among the particles, and also an activator in one particle exhibits uniformly dispersed distribution, resulting in enhanced quantum efficiency.

### EFFECTS OF THE INVENTION

The nanophosphor and the nanophosphor composite according to the present invention produce excellent effects in emission luminance.

### BEST MODE TO CARRY OUT THE INVENTION

The present invention will now be detailed.

The dispersion ratio of emission luminance is expressed by a numerical value (%) obtained by multiplying a value, obtained by dividing the standard deviation by the average luminance, by 100, being an index for the monodispersion degree of the luminance intensity of phosphor particles to represent the degree of variation from the average luminance. The dispersion ratio of luminance intensity of the present invention is 5% - 20%, and preferably 5% - 15%.

To obtain luminance distribution, the luminance per particle needs to be determined. A microscopic region is excited using a near-field microscope, and light emission is detected by positioning an optical fiber on the tip of a cantilever to obtain the luminance per particle. In the present invention, the dispersion ratio of luminance intensity is determined by measuring 100 particles.

A half-value width corresponds to a spectrum width at half the maximum emission intensity. The half-value width is 2 nm - 20 nm, and preferably 5 nm - 15 nm. The emission spectrum of the present invention represents the average value when the emission spectra of 100 particles are determined, similarly to the case of the determination of the luminance distribution as described above.

The nanophosphor composite of the present invention refers to a complex material (a composite) prepared by coating an organic substance exhibiting bioaffinity or an organic substance having a bio-adsorptive functional group on a probe phosphor to impart bioaffinity (or so as not to induce living body-excreting reaction) when a phosphor probe is introduced into a cell for vital staining observation, antigen-antibody reaction site observation, or protein observation using an electron microscope or a fluorescence microscope. For application to various types of cells, the particle diameter of the probe is preferably as small as possible, and also a composite featuring at most 15 nm has been greatly demanded. To realize this, it has been found that a nanostructured crystal of a size of 2 - 10 nm is suitable as described in the present invention, and a nanostructured crystal, featuring uniform luminance distribution, exhibits high adsorptive properties to a coating material, resulting in a small coating thickness, whereby the composite size can be controlled to be of a small particle diameter.

As the coating material, there can be exemplified ethylene glycols, water-soluble polymers incorporating a functional group exhibiting affinity to body tissues such as a carboxyl group or an amino group, and active agents (TOPO: trioctylphosphine oxide and TOP: trioctylphosphine). These may be used in combination or individually.

### EXAMPLES

The present invention will now specifically be described with reference to examples that by no means limit the scope of the present invention.

### Examples 1 - 12

### <<Preparation of Phosphors>>

In the examples, ZnS and Mn (manganese) were used as a base material and an activator, respectively. Manganese is doped as a divalent cation.

### <Preparation of Phosphors 1 and 2>

There were mixed 150 ml of an ethanol solution of zinc acetate (0.2 mol/l) and 25 ml of an ethanol solution of manganese acetate (0.012 mol/l), followed by being stirred using a magnetic stirrer for 10 minutes while being kept at 10 °C in a temperature-controlled cooling bath to obtain a mixed solution.

Subsequently, while being kept at 10 °C, 60 ml of a sodium sulfide aqueous solution (0.45 mol/l) was prepared. While this solution was vigorously stirred in a temperature-controlled bath at 10 °C, the mixed ethanol solution of zinc acetate and manganese acetate was gradually added thereto using a rotary pump at a feed rate of 20 ml/minute. After the addition, the reaction system was vigorously stirred for 10 minutes while the temperature was controlled to 10 °C.

Further, using a sampling solution, phosphor particles formed were observed with a transmission electron microscope (TEM), and then it was verified that the average diameter of 100 particles was 5.0 nm. Still further, with regard to the particle diameter size distribution, the standard deviation was obtained from the sizes of the 100 particles, and then the monodispersion degree (%) was represented by the standard deviation/the average particle diameter. The results confirm that the monodispersion degrees are high, as shown in Table 1.

Subsequently, while stirring, 50 ml of acrylic acid as an organic coating material was added using a rotary pump at a feed rate of 20 ml/minute, and after the addition, the reaction system was vigorously stirred for 10 minutes.

This resulting solution was centrifuged using a centrifugal machine at 8,000 rpm for 10 minutes to separate precipitates from nonreacted constituents. The precipitates having been isolated were dried at 50 °C for 24 hours.

Phosphor 1 (ZnS:Mn) (corresponding to Example 1) obtained by pulverizing a dried solid substance was evaluated as described later.

Herein, Phosphor 2 (corresponding to Example 2) was prepared in the same manner as Phosphor 1 described above, except that no acrylic acid was added, and then evaluated as described later.

Further, Phosphors 3 - 11 (corresponding to Examples 3 - 11, respectively), being different in particle diameter and distribution, were prepared in the same manner as for Phosphor 1, except that the concentration of zinc acetate, the concentration of manganese acetate, and the concentration of sodium sulfide, as well as the temperature and the feed rate were changed. In this case, Phosphor 6 with no acrylic acid added was also prepared. Incidentally, via acrylic acid modification, a nanophosphor composite, having a particle diameter 10% larger than that of the original nanophosphor, was prepared.

### <Synthesis of a phosphor for Comparison 4 (corresponding to Example 12)>

As a raw material for a base material, zinc acetate and manganese acetate are blended at a mol ratio of 10 : 1 and mixed using a ball mill. Sulfur was added to this mixture, followed by being placed in a sealed container for firing at 1,000 °C for 2 hours. The resulting product was pulverized using a wet-type ball mill to obtain a finely particulate phosphor, which was subjected to classification to give ZnS:Mn having the particle diameter described in Table 1. Then the following evaluations were carried out.

### [Emission Luminance Distribution Evaluation]

The emission luminance per particle was determined with a near-field microscope (produced by JASCO Corp.) using a light source of an excitation wavelength of 365 nm. Determination was conducted for 100 particles to obtain the luminance dispersion ratio shown in Table 1.

### [Emission Luminance Evaluation]

As the emission luminance, luminance was determined using Konica Minolta LS-100 in which 1 g of a phosphor was exposed to excitation light at 365 nm, being represented by a relative value when that of Comparison 1 was designated as 100%.

### [Half-value Width Evaluation of Light Emission]

Similarly to the above, the spectra of 100 particles were obtained using a spectrometer, in which a synthesized particle of the present invention was exposed to a light source at an excitation wavelength of 356 nm, and the emitted light therefrom was allowed to pass through an optical fiber and detected by a photodiode. The spectrum width at half the maximum emission intensity of the spectrum was evaluated. The average value for the 100 particles is listed in Table 1.

### [Durability Evaluation]

Continuous irradiation was carried out for 10 hours using a UV light source (254 nm). Luminance on 356 nm light excitation was measured, and represented as a relative value (%) after UV irradiation based on a value measured before the irradiation.

**Table 1**

| Example No. | Average Particle Diameter (nm) | Particle Diameter Dispersion degree (%) | Luminance Dispersion Ratio (%) | Emission Half-value Width (nm) | Acrylic Acid (added/not added) | Luminance | Durability | Remarks |
|---|---|---|---|---|---|---|---|---|
| 1 | 5.0 | 10 | 8.0 | 9.0 | added | 140 | 100 | Inv. |
| 2 | 5.0 | 10 | 8.0 | 9.0 | not added | 133 | 97 | Inv. |
| 3 | 3.0 | 10 | 6.0 | 10 | added | 150 | 100 | Inv. |
| 4 | 8.0 | 10 | 11 | 11.0 | added | 130 | 100 | Inv. |
| 5 | 4.0 | 15 | 9.0 | 10 | added | 135 | 100 | Inv. |
| 6 | 3.0 | 10 | 6.0 | 8.0 | not added | 120 | 95 | Inv. |
| 7 | 8.0 | 15 | 12 | 13 | added | 130 | 97 | Inv. |
| 8 | 2.0 | 5 | 5.5 | 6.5 | added | 155 | 100 | Inv. |
| 9 | 8.0 | 25 | 25 | 22 | not added | 100 | 80 | Comparison 1 |
| 10 | 3.0 | 25 | 20 | 25 | not added | 95 | 75 | Comparison 2 |
| 11 | 20 | 15 | 25 | 20 | not added | 90 | 70 | Comparison 3 |
| 12 | 10 | 35 | 40 | 35 | not added | 60 | 30 | Solid-phase Method Comparison 4 |

| | | | | | | | | |
|---|---|---|---|---|---|---|---|---|
| Inv.: Present Invention | | | | | | | | |

As shown in Table 1, it is understood that excellent emission luminance and durability can be realized in such a manner that particle formation is controlled so that emission luminance distribution may fall within a monodispersion degree which is the range of the present invention, as described in the present invention. Although particle diameter distribution greatly contributes to the above, inner defects are presumed to be another factor.

Further, it is understood that in the nanophosphor composite of the present invention whose surface is coated via addition of acrylic acid, emission intensity is greatly enhanced as well as durability via the surface coating.

## Claims

1. A nanophosphor comprising a nanostructured inorganic crystal having a particle diameter of 2 - 10 nm,
wherein the nanostructured inorganic crystal has a dispersion ratio of luminance intensity distribution of 5 - 20%.

2. The nanophosphor as described in claim 1, having a half-value width in an emission spectrum of 2 - 20 nm.

3. A nanophosphor composite comprising the nanophosphor as described in claim 1 or 2 and an organic coating material covering the nanophosphor,
wherein a particle diameter of the nanophosphor composite is 5 - 15 nm.
